# EUROPEAN PATENT APPLICATION

(11) **EP 1 892 282 A1**
(43) Date of publication of application: **27.02.2008**
(21) Application number: 06747074.0
(22) Date of filing: 01.06.2006
(51) Int. Cl.: C10M 133/04, B23Q 11/10, C10M 133/06, C10M 133/10, C10M 133/12, C10M 173/00, C10N 30/00, C10N 30/06, C10N 30/16, C10N 40/20

(54) **METALWORKING FLUID COMPOSITION AND METALWORKING PROCESS**

(30) Priority: 01.06.2005 JP 2005161660
(71) Applicant: KYODO YUSHI CO., LTD., Kanagawa 251-8588 (JP)
(72) Inventor: SASAKI, Setsuo, c/o Kyodo Yushi Co., Ltd., Fujisawa-shi, Kanagawa 251-8588 (JP); GOTO, Koichi,c/o Kyodo Yushi Co., Ltd., Fujisawa-shi, Kanagawa 251-8588 (JP); UEDA, Atsuya, c/o Kyodo Yushi Co., Ltd., Fujisawa-shi, Kanagawa 251-8588 (JP); MIMA, Satoshi, c/o Kyodo Yushi Co., Ltd., Fujisawa-shi, Kanagawa 251-8588 (JP)
(74) Representative: Vossius & Partner
(86) International application number: PCT/JP2006/310972
(87) International publication number: WO 2006/129747

(57) **Abstract**

The present invention provides a water-soluble metal-processing oil composition which is excellent in putrefaction resistant properties and sparingly has any bad influence upon global environment and human body and a method for processing metals which makes use of the metal-processing oil composition.

The metal-processing oil composition of the invention comprises an amine carrying a linear or branched alkyl group having not less than 4 carbon atoms (component A) in an amount ranging from 0.5 to 20% and an amine carrying a cycloalkyl ring or a benzene ring (component B) in an amount ranging from 0.5 to 20% and the method for processing metals is **characterized in that** it uses the metal-processing oil composition.

## Description

### Technical Field

The present invention relates to a water-soluble metal-processing oil composition which can widely be applied to metal-processing methods including cutting and grinding processing methods and even plastic forming methods and a method for processing metals which makes use of the metal-processing oil composition and more particularly to a water-soluble metal-processing oil composition excellent in putrefaction resistant properties and a method for processing metals which makes use of the metal-processing oil composition.

### Background Art

There have been known, as cutting oils (or lubricants for cutting processing) widely used in the fields of cutting and grinding processing, water-insoluble cutting oils which comprise a mineral oil as a base oil, and water-soluble cutting oils which comprise, for instance, a mineral oil, a surfactant and an organic amine and which are diluted with water before use.

In this connection, a compound, called preservative, is added to water-soluble cutting oil or an amine having a preservative effect is incorporated into the cutting oil, in order to improve the putrefaction resistant properties of the cutting oil.

However, there have recently been required further saving of natural resources of the earth and the prevention of any deterioration of global environment and there has also been desired, even in the field of cutting oils, for the development of a cutting oil or a lubricant which is less harmful to global environment and which can further be used over a longest possible extended period of time, as compared with the conventionally developed oils.

As such water-soluble metal-processing oils, there have conventionally been known, for instance, a water-soluble metal-processing cutting oil composition which makes use of Mentha (peppermint) oil (see Patent Document 1); a water-soluble metal-processing cutting oil composition which makes use of cinnamon oil (see Patent Document 2); a water-soluble metal-processing cutting oil which makes use of an aromatic amine or an alicyclic amine (see Patent Document 3); a water-soluble metal-processing cutting oil which makes use of a benzole compound and a p-oxybenzoic acid ester compound (see Patent Document 4); an anti-bacterial water-soluble cutting oil which makes use of an alkylene-diamine (see Patent Document 5); a water-soluble cutting oil composition which makes use of a fatty acid alkanolamide-ethylene oxide adduct and an alkylamine-ethylene oxide adduct, an alicyclic amine-ethylene oxide adduct, a fatty acid-higher alcohol adduct (see Patent Document 6); a water-soluble cutting/grinding oil which makes use of, for instance, a primary, secondary or tertiary alkylamine, an aromatic diamine-oxyalkylene adduct, and an alicyclic diamine-oxyalkylene adduct (see Patent Document 7); and such a water-soluble metal-processing cutting oil composition which comprises a primary alkanolamine, a carboxylic acid having 6 to 24 carbon atoms and a specific alkylene-diamine (see Patent Document 8).

However, these water-soluble metal-processing cutting oils are effective for controlling general bacteria, but do not show any sufficient effect on fungi and yeast. In this respect, those effective to control fungi and yeast make use of a halogen-containing compound, a polycyclic aromatic compound, a phenolic compound or a metal salt, some of these compounds are specified to be subjects for the PRTR (pollutant release and transfer register) regulation or control and they may adversely affect human body.

From the foregoing standpoints, the inventors of this invention have conducted further investigations of main components (raw materials) used in cutting oils and as a result, they have found that substances showing putrefaction resistant properties such as preservatives and amines suffer from the following problems:
As typical compounds serving as such preservatives, there can be listed, for instance, chlorine atom-containing compounds, bromine atom-containing compounds, fluorine atom-containing compounds. The metal-processing oils in general generate waste oils after practically using the same. In this connection, if the waste oil is disposed, for instance, through combustion, the incinerator would be damaged by the action of gases generated through the combustion of waste oil such as chlorine gas or hydrogen chloride gas and this would correspondingly lead to considerable reduction of service life of the incinerator. In addition, it has been recognized that a part of such chlorine atom-containing additive would result in generation of dioxin through or during the foregoing incineration treatment.

On the other hand, there has been a strong movement to hold the use of amines since some of them would be considered to be quite harmful to human body. For instance, monoethanolamine which is specified as a substance to be regulated on the basis of the provisions stipulated in the PRTR law and enforced since last year and secondary amines may have a high probability of generating nitrosamines which serve as carcinogenic substances when they are used in combination with a nitrite.

However, preservatives or amines have been considered to be essential compounds to improve putrefaction resistant properties of cutting oils.
Patent Document 1: Japanese Patent No. 2,676,056;
Patent Document 2:Japanese Patent No. 2,645,675;
Patent Document 3: Japanese Patent No. 2,510,233;
Patent Document 4: Japanese Examined Patent Publication Hei 7-37632;
Patent Document 5: Japanese Examined Patent Publication Hei 7-30348;
Patent Document 6: Japanese Examined Patent Publication Hei 6-31388;
Patent Document 7: Japanese Un-Examined Patent Publication Hei 9-316482; and
Patent Document 8: Japanese Examined Patent Publication Hei 6-76590.

### Disclosure of the Invention

### Problems That the Invention is to Solve

It is an object of the present invention to provide a water-soluble metal-processing oil composition which can widely be applied to metal-processing operations including cutting and grinding processing operations and even plastic forming operations and a method for processing metals which makes use of the metal-processing oil composition. More particularly, it is an object of the present invention to provide a water-soluble metal-processing oil composition excellent in putrefaction resistant properties and a method for processing metals which makes use of the metal-processing oil composition.

It is another object of the present invention to provide a water-soluble metal-processing oil composition which is excellent in putrefaction resistant properties and sparingly has any bad influence upon global environment and human body and a method for processing metals which makes use of the metal-processing oil composition.

### Means for Solving the Problems

The inventors of this invention have conducted various studies to accomplish the foregoing objects, have found that when a specific amine is incorporated into a metal-processing oil composition in a specific rate as a substitute for conventionally used preservative or amine, the resulting metal-processing oil composition shows putrefaction resistant properties superior to that observed for the cutting oil comprising the conventional preservative or amine and have thus completed the present invention. Accordingly, the present invention provides a water-soluble metal-processing oil composition and a method for processing metals which makes use of the metal-processing oil composition as will be detailed below:
1. A metal-processing oil composition comprising an amine carrying a linear or branched alkyl group having not less than 4 carbon atoms (component A) in an amount ranging from 0.5 to 20% and an amine carrying a cycloalkyl ring or a benzene ring (component B) in an amount ranging from 0.5 to 20%.
2. The metal-processing oil composition as set forth in the foregoing item 1, wherein the component A is represented by the following general formula 1 : 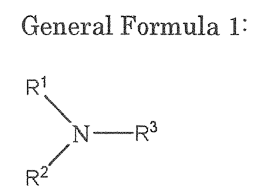 wherein R¹ represents an alkyl group having not less than 4 carbon atoms or an oxyalkyl group having not less than 4 carbon atoms; R² and R³ represent at least one member selected from the group consisting of groups represented by the formula: (CₓH₂ₓO)_{y}H, H, alkyl groups each having not less than 4 carbon atoms or oxyalkyl groups each having not less than 4 carbon atoms; x is an integer ranging from 2 to 4 and y is 1 or 2.
3. The metal-processing oil composition as set forth in the foregoing item 1 or 2, wherein the component B is at least one member selected from amines represented by the following general formulas 2 to 5: 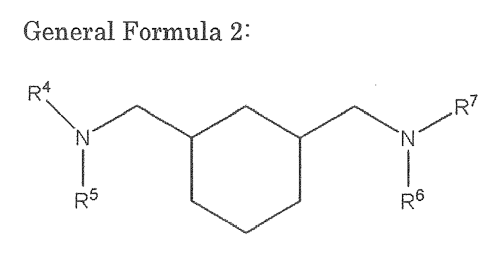 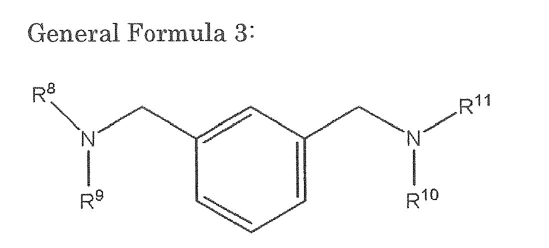 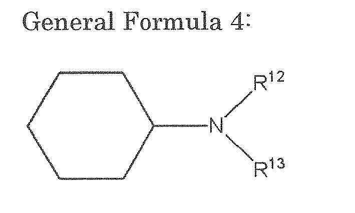 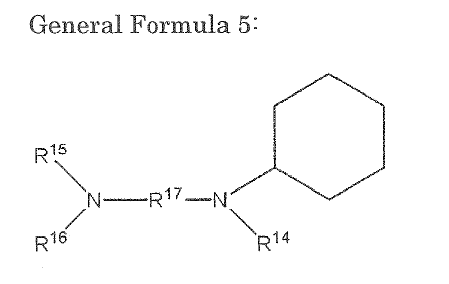 wherein R⁴ to R¹¹ may be the same or different and represent H or (CₓH₂ₓO)ₙH, x is an integer ranging from 2 to 4 and n is an integer ranging from 1 to 3;
   R¹² and R¹³ may be the same or different and represent H or C₆H₁₁ (cyclohexyl group) or (CₓH₂ₓO)ₙH, x is an integer ranging from 2 to 4 and n is an integer ranging from 1 to 3;
   R¹⁴ to R¹⁶ may be the same or different and represent H or (CₓH₂ₓO)ₙH, x is an integer ranging from 2 to 4 and n is an integer ranging from 1 to 3;
   R¹⁷ represents a group : CₓH₂ₓ, and x is an integer ranging from 2 to 4.
4. The metal-processing oil composition as set forth in any one of the foregoing items 1 to 3, wherein the component A is an amine represented by the foregoing general formula 1, wherein R¹ represents an alkyl group having 4 to 12 carbon atoms, R² and R³ each represent at least one member selected from the group consisting of (CₓH₂ₓO)_{y}H, H and alkyl groups having 4 to 12 carbon atoms, x is an integer ranging from 2 to 4, and y is 1 or 2.
5. The metal-processing oil composition as set forth in any one of the foregoing items 1 to 4, wherein the component A is an amine represented by the foregoing general formula 1, in which R¹ represents an alkyl group having 4 carbon atoms, R² and R³ each represent at least one member selected from the group consisting of (CₓH₂ₓO)_{y}H, H and alkyl groups having 4 carbon atoms, x is an integer ranging from 2 to 4, and y is 1 or 2.
6. The metal-processing oil composition as set forth in any one of the foregoing items 1 to 5, wherein the component A is a secondary amine represented by the foregoing general formula 1, in which R¹ represents n-butyl or t-butyl group, R² represents a group: (CₓH₂ₓO)_{y}H, R³ represents H, x is an integer ranging from 2 to 4, and y is 1 or 2.
7. The metal-processing oil composition as set forth in any one of the foregoing items 1 to 6, wherein the component A is n-butyl monoethanolamine or t-butyl monoethanolamine.
8. The metal-processing oil composition as set forth in any one of the foregoing items 1 to 7, wherein the component B is an amine represented by the foregoing general formula 2 or 3, in which R⁴ to R¹¹ may be the same or different and each represent H or (CₓH₂ₓO)ₙH, x is an integer ranging from 2 to 4 and n is an integer ranging from 1 to 3.
9. The metal-processing oil composition as set forth in any one of the foregoing items 1 to 8, wherein the component B is an amine represented by the foregoing general formula 2 or 3, wherein R⁴ to R¹¹ represent H.
10. The metal-processing oil composition as set forth in any one of the foregoing items 1 to 7, wherein the component B is an amine represented by the foregoing general formula 4.
11. The metal-processing oil composition as set forth in the foregoing item 10, wherein the component B is dicyclohexylamine.
12. The metal-processing oil composition as set forth in the foregoing item 10, wherein the component B is an amine represented by the general formula 4, wherein R¹² and R¹³ may be the same or different and each represent a group: (CₓH₂ₓO)ₙH, x is an integer ranging from 2 to 4 and n is an integer ranging from 1 to 3.
13. The metal-processing oil composition as set forth in the foregoing item 12, wherein the component B is an amine represented by the general formula 4, wherein R¹² and R¹³ may be the same or different and each represent a group: (C₂H₄O)ₙH, and n is an integer ranging from 1 to 3.
14. The metal-processing oil composition as set forth in any one of the foregoing items 1 to 7, wherein the component B is an amine represented by the foregoing general formula 5.
15. The metal-processing oil composition as set forth in the foregoing item 14, wherein the component B is an amine represented by the general formula 5, wherein R¹⁴ to R¹⁶ may be the same or different each represent H or (C₂H₄O)ₙH, and n is an integer ranging from 1 to 3.
16. A method for processing a metal characterized in that the method makes use of the metal-processing oil composition as set forth in any one of the foregoing items 1 to 15.

### Effects of the Invention

The water-soluble metal-processing oil composition according to the present invention shows excellent working characteristics in the metal processing steps including cutting and grinding processing operations. In addition, the metal-processing oil composition is likewise excellent in putrefaction resistant characteristics and sparingly has any bad influence upon global environment and human body. The metal-processing oil composition of the present invention can exert antibacterial effects not only on general bacteria, but also fungi such as mold and yeast due to synergistic effect observed when using a specific water-soluble amine and a specific water-insoluble amine in combination and accordingly, the metal-processing oil composition shows putrefaction resistant effect considerably higher than that observed for conventional metal-processing oil composition.

### Best for Carrying Out the Invention

The metal-processing oil composition (stock solution) of the present invention is characterized in that it comprises, on the basis of the total amount of the composition, an amine carrying a linear or branched alkyl group having not less than 4 carbon atoms (component A) in an amount ranging from 0.5 to 20% (in this specification, the ter "%" means "% by mass" unless otherwise specified) and an amine carrying a cycloalkyl ring or a benzene ring (component B) in an amount ranging from 0.5 to 20%.

The amine carrying a linear or branched alkyl group having not less than 4 carbon atoms, as the component A, may be, for instance, n-butyl monoethanolamine, n-butyl diethanolamine, di-n-butyl monoethanolamine, t-butyl monoethanolamine, t-butyl diethanolamine, di-t-butyl monoethanolamine, n-butyl monoisopropanolamine, n-butyl diisopropanolamine, di-n-butyl monoisopropanolamine, t-butyl mono-isopropanolamine, t-butyl diisopropanolamine, di-t-butyl monoisopropanolamine, n-octyl monoethanolamine, n-octyl diethanolamine, di-n-octyl monoethanolamine, n-lauryl diethanolamine, and di-n-lauryl monoethanolamine.

The amine carrying a cycloalkyl ring or a benzene ring, as the component B, may be, for instance, 1,3-bisaminomethyl cyclohexane, 1,3-bisaminomethyl cyclohexane-ethylene oxide adducts, 1,3-bisaminomethyl cyclohexane-propylene oxide adducts, m-xylene-diamine, m-xylene-diamine-ethylene oxide adducts, m-xylene-diamine-propylene oxide adducts, cyclohexylamine, di-cyclohexylamine, cyclohexylamine-ethylene oxide adducts, cyclohexylamine-propylene oxide adducts, cyclohexyl-ethylenediamine, cyclohexyl-propylenediamine, cyclohexyl-butylenediamine, cyclohexyl-ethylenediamine-ethylene oxide adducts, cyclohexyl-propylenediamine-ethylene oxide adducts, and cyclohexyl-butylenediamine-ethylene oxide adducts. These amines may be used alone or in any combination of a plurality of these amines.

The metal-processing oil composition of the present invention comprises at least one amine carrying a linear or branched alkyl group having not less than 4 carbon atoms (component A) and at least one amine carrying a cycloalkyl ring or a benzene ring (component B), as essential components. In this connection, examples of the components A preferably used herein are n-butyl monoethanolamine, and t-baxtyl monoethanolamine; and examples of the components B preferably used herein are cyclohexyl propyldiamine, dicyclohexylamine and cyclohexylamine-ethylene oxide adducts, and more preferably, the combination of cyclohexyl propyldiamine with dicyclohexylamine, or the combination of cyclohexylamine-ethylene oxide adducts with dicyclohexylamine.

The metal-processing oil composition of the present invention is characterized in that it comprises the component A and the component B in a specific mixing ratio. More specifically, the amount of the component A ranges from 0.5 to 20%, preferably 0.5 to 15% and more preferably 2 to 8%; and the amount of the component B ranges from 0.5 to 20%, preferably 0.5 to 15% and more preferably 2 to 8%.

If the amount of the component A is less than 0.5% and/or that of the component B is less than 0.5%, the resulting metal-processing oil composition does not show any desired putrefaction resistant characteristics.

On the other hand, if the amount of the component A exceeds 20% or that of the component B exceeds 20%, the resulting metal-processing oil composition has a strong stimulation to the skin and may become a cause of skin roughness-generation and accordingly, the composition cannot suitably be used as a metal-processing oil. For this reason, the upper limits of the components A and B are preferably not more than 15%, respectively.

Furthermore, the foregoing component A may comprise a single component or a mixture of at least two components and the same is also true for the component B.

In addition, the water-soluble metal-processing oil composition according to the present invention may if necessary comprise other basic substances such as water-soluble amines and/or caustic potash and caustic soda. For instance, examples of such water-soluble amines include diethanolamine, diisopropanolamine, triethanolamine, triisopropanolamine, methyl diethanolamine, dimethyl ethanolamine, monoisopropanolamine, 2-amino-2-methyl-1-propanol, 2-(2-aminoethoxy) ethanol, diethyl monoisopropanolamine, N,N-di-n-propylamino-isopropanol, N,N-ethylenediamine-(diisopropanol), N,N-ethylenediamine-(diethanol), mono-n-butyl diethanolamine, monoethyl diisopropanol-amine, and diglycolamine, but other water-soluble amines or inorganic alkalis may likewise be used in the present invention.

More specifically, preferably used herein are the combinations of the foregoing water-soluble amines with, for instance, diglycolamine, methyl diethanolamine, monoisopropanolamine, 2-amino-2-methyl-1-propanol, and 2-(2-aminoethoxy) ethanol, in order to maintain pH value of the composition at a relatively high level.

In addition, the water-soluble metal-processing oil composition of the present invention may if necessary comprise linear and/or branched saturated fatty acids and/or dibasic acids and specific examples thereof include caproic acid, enanthic acid, caprylic acid, pelargonic acid, capric acid, undecanoic acid, dodecanoic acid, tridecanoic acid, pentadecanoic acid, heptadecanoic acid, nonadecanoic acid, lauric acid, myristic acid, palmitic acid, stearic acid, arachic acid, behenic acid, isostearic acid, elaidic acid, oleic acid, linoleic acid, linolenic acid, hydroxy-lauric acid, hydroxy-myristic acid, hydroxy-palmitic acid, hydroxystearic acid, hydroxy arachic acid, hydroxy-behenic acid, ricinoleic acid, hydroxy-octadecenoic acid, sebacic acid, dodecane-diacid, dodecyl succinic acid, lauryl succinic acid, stearyl succinic acid, isostearyl succinic acid, and dimeric acids. In addition to the foregoing, usable in the present invention also include, for instance, fatty acids derived from naturally occurring fats and oils such as those derived from animals, fishes, plants and cereals.

Furthermore, the water-soluble metal-processing oil composition of the present invention may if necessary comprise a base oil. Examples of such base oils are mineral oils, polyol esters, fats and oils, polyglycols, poly(α-olefins), α-olefins, n-paraffins, iso-paraffins, alkyl-benzenes, and polyethers. These base oils may be used alone or in any combination of a plurality of different base oils. Preferably used herein include, for instance, mineral oils, polyglycols, and alkyl-benzenes.

The metal-processing oil composition of the present invention may if necessary comprise a rust proofing agent, for instance, a fatty acid such as lauryl succinic acid, stearyl succinic acid, isostearyl succinic acid or dodecane diacid; sulfonic acid salt such as sodium petroleum sulfonate; and a carboxyhc acid amide.

Moreover, the metal-processing oil composition of the present invention may if necessary comprise a silicone-containing antifoaming agent, an alcoholic antifoaming agent, or a benzothiazole type anticorrosive for metals.

Further, the metal-processing oil composition of the present invention may if necessary comprise a preservative such as benzo-isothiazoline and/or a derivative thereof, sodium Omadine, and metal pyrithilonates; and/or an alkylamine represented by laurylamine and oleylamine and oxyethylene adducts thereof as a preservative or a bacterium-controlling agent.

The metal-processing oil composition of the present invention is in general used after diluting the same 5 to 200 times with water.

The present invention will hereunder be described in more detail with reference to the following Examples.

In the following Examples (1 to 28), there were prepared metal-processing oil compositions whose compositions (by mass) (the amounts of the ingredients summed to 100 parts by mass for each composition) were detailed in the following Table 1 (Examples 1 to 8), Table 2 (Examples 9 to 16) and Table 3 (Examples 17 to 28):

**Table 1:**

| | Component | 1 | 2 | 3 | 4 | 5 | 6 | 7 | 8 |
|---|---|---|---|---|---|---|---|---|---|
| A | n-butyl monoethanolamine | 5 | | | | 5 | 5 | 5 | 5 |
| | n-butyl diethanolamine | | 5 | | | | | | |
| | t-butyl monoethanolamine | | | 5 | | | | | |
| | n-octyl monoethanolamine | | | | 2 | | | | |
| B | m-xylenediamine | | | | | 3 | | | |
| | m-xylenediamine EO 2 mole adduct | | | | | | 4 | | |
| | 1.3-bisaminomethyl cyclohexane | | | | | | | 3 | |
| | dicyclohexylamine | 5 | 5 | 5 | 5 | 3 | 3 | 3 | 5 |
| | cyclohexylpropyl diamine | 1 | 1 | 1 | 1 | | | | |
| | cyclohexylamine EO 2 mole adduct | | | | | | | | 1 |
| | methyl diethanolamine | 6 | 6 | 6 | 6 | 6 | 6 | 6 | 6 |
| | monoisopropanolamine | | | | 2 | | | | |
| | pelargonic acid | 3.5 | 3.5 | 3.5 | 3.5 | 3.5 | 3.5 | 3.5 | 3.5 |
| | neodecanoic acid | 1 | 1 | 1 | 1 | 1 | 1 | 1 | 1 |
| | oleic acid | 5 | 5 | 5 | 5 | 5 | 5 | 5 | 5 |
| | dodecane diacid | 2 | 2 | 2 | 2 | 2 | 2 | 2 | 2 |
| | sorbitan monooleate | 9 | 9 | 9 | 8 | 9 | 9 | 9 | 9 |
| | laurylamine EO 7 mole adduct | 3 | 3 | 3 | 3 | 3 | 3 | 3 | 3 |
| | oleyl alcohol EO 2 mole adduct | 3 | 3 | 3 | 3 | 3 | 3 | 3 | 3 |
| | mineral oil | Re. | Re. | Re. | Re. | Re. | Re. | Re. | Re. |
| | water | 10 | 10 | 10 | 10 | 10 | 10 | 10 | 10 |

| | | | | | | | | | |
|---|---|---|---|---|---|---|---|---|---|
| Re.: remnant | | | | | | | | | |

**Table 2**

| | Component | 9 | 10 | 11 | 12 | 13 | 14 | 15 | 16 |
|---|---|---|---|---|---|---|---|---|---|
| A | n-butyl monoethanoleamine | 6 | 5 | 15 | 3 | 3 | 3 | 3 | 3 |
| | n-butyl diethanolamine | | | | | | | 3 | |
| | t-butyl monoethanolamine | | | | | | | | |
| | n-octyl monoethanolamine | | | | | | | | |
| B | m-xylenediamine | | | | | | | | |
| | m-xylenediamine EO 2 mole adduct | | | | | | | | |
| | 1.3-bi-saminomethyl cyclohexane | 1 | 1 | | | | | | 3 |
| | dicyclohexylamine | 3 | 2 | 2 | 3 | 3 | 3 | 3 | 3 |
| | cyclohexylpropyl diamine | | | | | | | | |
| | cyclohexylamine EO 2 mole adduct | | | | | | 8 | | |
| | methyl diethanolamine | | | | | | | | |
| | monoisopropanolamine | | | | | | | | |
| | diglycolamine | 6 | 5 | | 8 | 8 | 2 | 6 | 4 |
| | pelargonic acid | | 7 | 5 | 5 | 5 | 5 | 5 | 5 |
| | neodecanoic acid | 4 | | | | | | | |
| | oleic acid | 6 | 5 | 6 | 1 | | | | |
| | castor oil fatty acid | | 5 | 6 | | 6 | 6 | 6 | 6 |
| | castor oil fatty acid polycondensate (AV : 32) | 9 | 6 | 6 | 16 | 10 | 10 | 10 | 10 |
| | dodecane diacid | 2 | 1 | 2 | 2 | 3 | 3 | 3 | 3 |
| | sorbitan monooleate | | | | | | | | |
| | laurylamine EO 7 mole adduct | 2 | 2 | 1 | | | | | |
| | oleyl alcohol EO 2 mole adduct | 1 | | | 3 | 3 | 3 | 3 | 3 |
| | preservative | | | | | | | | |
| | mineral oil | Re. | | | | | | | |
| | alkyl benzene | | 20 | 20 | 30 | 30 | 30 | 30 | 30 |
| | polyglycol | | | | 5 | 5 | 5 | 5 | 5 |
| | water | 5 | Re. | Re. | Re. | Re. | Re. | Re. | Re. |

| | | | | | | | | | |
|---|---|---|---|---|---|---|---|---|---|
| Re.: remnant | | | | | | | | | |

**Table 3-1**

| | Component | 17 | 18 | 19 | 20 | 21 | 22 |
|---|---|---|---|---|---|---|---|
| A | n-butyl mono-ethanoleamine | | | 5 | 5 | 5 | 22 |
| | n-butyl diethanolamine | | | | | | |
| | t-butyl monoethanolamine | | | | | | |
| | n-octyl monoethanolamine | | | | | | |
| B | m-xylene diamine | | | | | 6 | |
| | m-xylenediami.ne EO 2 mole adduct | | | | | | |
| | 1.3-bisaminomethyl cyclohexane | | | | | | |
| | dicyclohexylamine | 5 | 5 | | | 10 | 5 |
| | cyclohexylpropyl diamine | 1 | 1 | | | 1 | 1 |
| | cyclohexylamine EO 2 mole adduct | | | | | 5 | |
| | methyl diethanolamine | 6 | 6 | 6 | 6 | 6 | 6 |
| | monoisopropanolamine | 3.2 | 3.2 | 2.5 | 2.5 | | |
| | diglycolamine | | | | | | |
| | pelargonic acid | 3.5 | 3.5 | 3.5 | 3.5 | 3.5 | 3.5 |
| | neodecanoic acid | 1 | 1 | 1 | 1 | 1 | 1 |
| | oleic acid | 5 | 5 | 5 | 5 | 9 | 9 |
| | castor oil fatty acid | | | | | | |
| | castor oil fatty acid polycondensate (AV : 32) | | | | | | |
| | dodecane diacid | 2 | 2 | 2 | 2 | 2 | 2 |
| | sorbitan monooleate | 7 | 7 | 10 | 10 | 9 | 9 |
| | laurylamine EO 7 mole adduct | 3 | 3 | 3 | 3 | 3 | 3 |
| | oleyl alcohol EO 2 mole adduct | 3 | 3 | 3 | 3 | 3 | 3 |
| | thiazoline preservative | | 0.5 | | 0.5 | | |
| | mineral oil | Re. | Re. | Re. | Re. | Re. | Re. |
| | alkyl benzene | | | | | | |
| | polyglycol | | | | | | |
| | water | 10 | 10 | 10 | 10 | 10 | 10 |

| | | | | | | | |
|---|---|---|---|---|---|---|---|
| Re.: remnant | | | | | | | |

**Table 3-2**

| | Component | 23 | 24 | 25 | 26 | 27 | 28 |
|---|---|---|---|---|---|---|---|
| A | n-butyl mono-ethanoleamine | | | 3 | 3 | 3 | 22 |
| | n-butyl diethanolamine | | | | | | |
| | t-butyl monoethanolamine | | | | | | |
| | n-octyl monoethanolamine | | | | | | |
| B | m-xylene diamine | | | | | 6 | |
| | m-xylenediamine EO 2 mole adduct | | | | | | |
| | 1.3-bisaminomethyl cyclohexane | | | | 6 | | |
| | dicyclohexylamine | 3 | 3 | | 10 | 10 | 5 |
| | cyclohexylpropyl diamine | | | | 1 | 1 | 1 |
| | cyclohexylamine EO 2 mole adduct | | | | 5 | 5 | |
| | methyl diethanolamine | | | | | | |
| | mono-isopropanolamine | | | | | | |
| | diglycolamine | 10 | 10 | 10 | 8 | 8 | 8 |
| | pelargonic acid | 5 | 5 | 5 | 5 | 5 | 5 |
| | neodecanoic acid | | | | | | |
| | oleic acid | | | | 4 | 4 | 4 |
| | castor oil fatty acid | 6 | 6 | 6 | 6 | 6 | 6 |
| | castor oil fatty acid polycondensate (AV : 32) | 10 | 10 | 10 | 10 | 10 | 10 |
| | dodecane diacid | 3 | 3 | 3 | 3 | 3 | 3 |
| | sorbitan monooleate | | | | | | |
| | laurylamine EO 7 mole adduct | | | | | | |
| | oleyl alcohol EO 2 mole adduct | 3 | 3 | 3 | 3 | 3 | 3 |
| | thiazoline preservative | | 0.5 | | | | |
| | mineral oil | | | | | | |
| | alkyl benzene | 30 | 30 | 30 | 30 | 30 | 30 |
| | polyglycol | 5 | 5 | 5 | 1 | 5 | 5 |
| | water | Re. | Re. | Re. | Re. | Re. | Re. |

| | | | | | | | |
|---|---|---|---|---|---|---|---|
| Re.: remnant | | | | | | | |

Each of the foregoing compositions was inspected for putrefaction resistant property, skin roughness-generation, dilution stability and cutting property according to the following methods:

### Test for Examining Putrefaction-Resistance

To 100 ml of each lubricant comprising each candidate composition diluted, with water, to a concentration of 3%, there was added the following putrefaction solution so that the concentration thereof was set at 3%, the resulting mixture was subjected to shaking culture at 30 degrees C (°C), and 150 rpm for 14 days and then the viable count for each cultured mixture was determined.

### Putrefaction Solution:

| | |
|---|---|
| Putrefied and deteriorated emulsion type cutting solution: | 50% |
| Trypt-Soy Culture Medium: | 25% |
| Grape Sugar-Peptone Culture Medium: | 25% |

The putrefaction solution used herein was obtained by subjecting the mixture of the foregoing components to aeration for 24 hours to thus activate the mixture.

### Evaluation Standard:

The numbers of general bacteria, mold, yeast and anaerobic bacterial cells as well as a degree of contamination were evaluated using SAN-AI Biochecker (available from San-ai Oil Co., Ltd.).
- General bacteria and yeast were evaluated according to the following 8 criteria as expressed in terms of the bacterial or fungal living cell number per unit volume of the culture medium (1 ml): No; 10³ cells>; 10⁴ cells; 10⁵ cells; 10⁶ cells; 10⁷ cells; and 10⁷ cells<.
- General bacteria and yeast were also evaluated according to the following 4 criteria as expressed in terms of the degree of contamination: No; L (slight degree); M (medium degree); and H (severe degree).
   The standard (border line) for judging on whether each composition could be acceptable or not was as follows: "No" for mold, yeast and anaerobic bacteria; and "10³ cells/ml>" for general bacteria.

### Evaluation of Inhibition of Skin Roughness - Generation:

Each cutting oil containing each candidate composition was diluted two times with water and a droplet of the resulting diluted solution was dropped on a patch test unit (FIN Chamber, available from Epitest Co., Ltd.), the latter was then applied onto a site on the upper arm of a panelist with the use of an adhesive tape, followed by the judgment of the skin roughness-generation on the basis of the condition of the skin, to which the patch was applied, examined after allowing the patch to stand on the upper arm for 24 hours. This was evaluated on the basis of the sum of the results (score) observed for subjects (10 male panelists) and according to the following evaluation criteria:
Evaluation Criteria:
   Score 3: The skin turned red, with the formation of blisters and wheals;
   Score 2: The skin turned red and was swollen;
   Score 1: The skin slightly turned red;
   Score 0.5: There was a suspicion of skin roughness-generation; and
   Score 0: There was not observed any reaction.

Regarding the foregoing evaluation criteria, the skin roughness-generation was carried out on the basis of the score obtained by summing the results obtained for 10 subjects and therefore, the lower the score obtained, the higher the skin roughness-inhibitory effect of the candidate composition. The border line for judging whether each composition could be acceptable was set at the level of "score 5".

### Test for Stability to Dilution

There was prepared hard water (a liquid obtained by diluting 0.0757g of calcium chloride dihydrate with distilled water to a total volume of one liter; German hardness: 3 deg.; Ca hardness: 54 ppm; see, for instance, JIS K 2221 "Cutting oil, Test for Stability to Emulsification"), each candidate composition was diluted with the hard water thus prepared to thus give a 5% diluted composition and then the diluted composition was visually observed immediately after the dilution and after 24 hours from the dilution. The evaluation standards are as follows
○: Acceptable; The composition was uniformly dissolved and free of any separation and the formation of any creamy layer;
Em: Unacceptable; There were observed the separation of the composition and the formation of a creamy layer.

### Test for Cutting property (Cutting Ability)

There was used, as a specimen, a material of an aluminum alloy (AC8B-T6, 300x200x30 mm, H_{R}B60), then a prepared hole of φ 5.45, blind hole were formed and the test for inspection of cutting property was carried out using a tap of M6 (New Roll Tap available from OSG Company) under the following conditions:

Cutting Speeds 10 m/min; Feed: 1 mm/rev.; Cutting Length: t = 17 mm (blind hole);"N" Number: 5.

The diluted metal-processing oil composition was supplied at a feed rate of 6 L/min.

Cutting property was evaluated on the basis of the evaluated tapping torque value thus obtained and on whether the cutting tool was broken or not. The evaluation standards are as follows:
O Acceptable; tapping torque: not more than 500 N - cm;
× : Unacceptable; there was observed welding of the cutting tool (processing of the material was impossible).

The results thus obtained are summarized in the following Tables 4 to 6.

**Table 4:**

| | 1 | 2 | 3 | 4 | 5 | 6 | 7 | 8 |
|---|---|---|---|---|---|---|---|---|
| Putrefaction resistance | | | | | | | | |
| After 7 days | | | | | | | | |
| General bacteria | no | no | no | no | no | no | no | no |
| Mold | no | no | no | no | no | no | no | no |
| Yeast | no | no | no | no | no | no | no | no |
| Anaerobic bacteria | no | no | no | no | no | no | no | no |
| After 14 days | | | | | | | | |
| General bacteria | no | no | no | no | no | no | no | no |
| Mold | no | no | no | no | no | no | no | no |
| Yeast | no | no | no | no | no | no | no | no |
| Anaerobic bacteria | no | no | no | no | no | no | no | no |
| Skin roughness-generation | 2.5 | 2.5 | 2.5 | 3.0 | 2.5 | 2.5 | 2.5 | 2.0 |
| Overall judgment | | | | | | | | |
| Putrefaction resistance | O | O | O | O | O | O | O | O |
| Skin roughness-generation | O | O | O | O | O | O | O | O |
| Cutting property | O | O | O | O | O | O | O | O |
| Dilution stability | O | O | O | O | O | O | O | O |

**Table 5**

| | 9 | 10 | 11 | 12 | 13 | 14 | 15 | 16 |
|---|---|---|---|---|---|---|---|---|
| Putrefaction resistance | | | | | | | | |
| After 7 days | | | | | | | | |
| General bacteria | no | no | no | no | no | no | no | no |
| Mold | no | no | no | no | no | no | no | no |
| Yeast | no | no | no | no | no | no | no | no |
| Anaerobic bacteria | no | no | no | no | no | no | no | no |
| After 14 days | | | | | | | | |
| General bacteria | no | no | no | no | no | no | no | no |
| Mold | no | no | no | no | no | no | no | no |
| Yeast | no | no | no | no | no | no | no | no |
| Anaerobic bacteria | no | no | no | no | no | no | no | no |
| Skin roughness-generation | 4.0 | 3.0 | 5.0 | 4.5 | 2.5 | 2.5 | 2.5 | 2.5 |
| Overall judgment | | | | | | | | |
| Putrefaction resistance | O | O | O | O | O | O | O | O |
| Skin roughness-generation | O | O | O | O | O | O | O | O |
| Cutting property | O | O | O | O | O | O | O | O |
| Dilution stability | O | O | O | O | O | O | O | O |

**Table 6**

| | 17 | 18 | 19 | 20 | 21 | 22 | 23 | 24 | 25 | 26 | 27 | 28 |
|---|---|---|---|---|---|---|---|---|---|---|---|---|
| Putrefaction resistance | | | | | | | | | | | | |
| After 7 days | | | | | | | | | | | | |
| General bacteria | no | no | no | no | no | no | no | no | no | no | no | no |
| Mold | no | no | L | no | no | no | no | no | L | no | no | no |
| Yeast | 10⁴ | no | 10³ | no | no | no | 10⁴ | no | 10⁴ | no | no | no |
| Anaerobic bacteria | no | no | no | no | no | no | no | no | no | no | no | no |
| After 14 days | | | | | | | | | | | | |
| General bacteria | no | no | no | no | no | no | no | no | no | no | no | no |
| Mold | no | no | H | no | no | no | no | no | H | no | no | no |
| Yeast | 10⁶ | no | 10⁵ | no | no | no | 10⁶ | no | 10⁵ | no | no | no |
| Anaerobic bacteria | no | no | no | no | no | no | no | no | no | no | no | no |
| Skin roughness-generation | 2.5 | 6.0 | 2.0 | 5.5 | 5.5 | 5.5 | 3.0 | 6.0 | 2.5 | 6.5 | 6.5 | 6.0 |
| Overall judgment | | | | | | | | | | | | |
| Putrefaction resistance | × | O | × | O | O | O | × | O | × | O | O | O |
| Skin roughness-generation | O | × | O | × | × | × | O | × | O | × | × | × |
| Cutting property | O | O | O | O | O | O | O | O | O | O | O | O |
| Dilution stability | O | O | O | O | × | O | O | O | O | × | × | O |

The results listed in Tables 4 to 6 clearly indicate that the water-soluble cutting oils (stock solution) according to the present invention prepared in Examples 1 to 16 were found to be excellent in all of the characteristic properties examined, or the putrefaction resistant property, the skin roughness-inhibitory effect, the cutting property and the stability to dilution.

## Claims

1. A metal-processing oil composition comprising an amine carrying a linear or branched alkyl group having not less than 4 carbon atoms (component A) in an amount ranging from 0.5 to 20% and an amine carrying a cycloalkyl ring or a benzene ring (component B) in an amount ranging from 0.5 to 20%.

2. The metal-processing oil composition as set forth in claim 1, wherein the component A is represented by the following general formula 1: 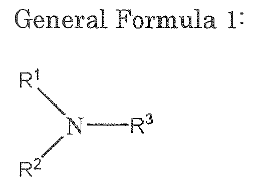 wherein R¹ represents an alkyl group having not less than 4 carbon atoms or an oxyalkyl group having not less than 4 carbon atoms; R² and R³ represent at least one member selected from the group consisting of groups represented by the formula: (CₓH₂ₓO)yH, H, alkyl groups each having not less than 4 carbon atoms or oxyalkyl groups each having not less than 4 carbon atoms; x is an integer ranging from 2 to 4 and y is 1 or 2.

3. The metal-processing oil composition as set forth in claim 1 or 2, wherein the component B is at least one member selected from amines represented by the following general formulas 2 to 5: 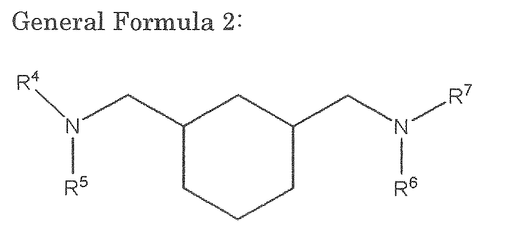 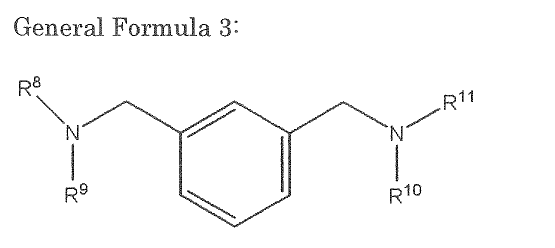 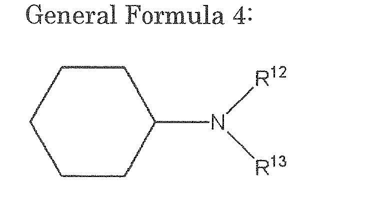 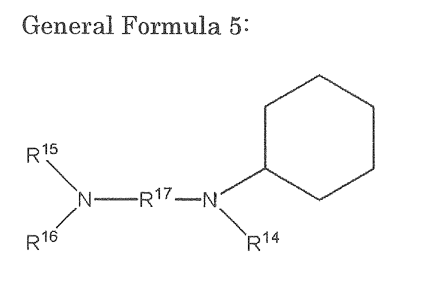 wherein R⁴ to R¹¹ may be the same or different and represent H or (CₓH₂ₓO)ₙH, x is an integer ranging from 2 to 4 and n is an integer ranging from 1 to 3;
R¹² and R¹³ may be the same or different and represent H or C₆H₁₁ (cyclohexyl group) or (CₓH₂ₓO)ₙH, x is an integer ranging from 2 to 4 and n is an integer ranging from 1 to 3;
R¹⁴ to R¹⁶ may be the same or different and represent H or (CₓH₂ₓO)ₙH, x is an integer ranging from 2 to 4 and n is an integer ranging from 1 to 3;
R¹⁷ represents a group : CₓH₂ₓ, and x is an integer ranging from 2 to 4.

4. The metal-processing oil composition as set forth in any one of claims 1 to 3, wherein the component A is an amine represented by the foregoing general formula 1, wherein R¹ represents an alkyl group having 4 to 12 carbon atoms, R² and R³ each represent at least one member selected from the group consisting of (CₓH₂ₓO)_{y}H, H and alkyl groups having 4 to 12 carbon atoms, x is an integer ranging from 2 to 4, and y is 1 or 2.

5. The metal-processing oil composition as set forth in any one of claims 1 to 4, wherein the component A is an amine represented by the foregoing general formula 1, in which R¹ represents an alkyl group having 4 carbon atoms, R² and R³ each represent at least one member selected from the group consisting of (CₓH₂ₓO)_{y}H, H and alkyl groups having 4 carbon atoms, x is an integer ranging from 2 to 4, and y is 1 or 2.

6. The metal-processing oil composition as set forth in any one of claims 1 to 5, wherein the component A is a secondary amine represented by the foregoing general formula 1, in which R¹ represents n-butyl or t-butyl group, R² represents a group: (CₓH₂ₓO)_{y}H, R³ represents H, x is an integer ranging from 2 to 4, and y is 1 or 2.

7. The metal-processing oil composition as set forth in any one of claims 1 to 6, wherein the component A is n-butyl monoethanolamine or t-butyl monoethanolamine.

8. The metal-processing oil composition as set forth in any one of claims 1 to 7, wherein the component B is an amine represented by the foregoing general formula 2 or 3, in which R⁴ to R¹¹ may be the same or different and each represent H or (CₓH₂ₓO)ₙH, x is an integer ranging from 2 to 4 and n is an integer ranging from 1 to 3.

9. The metal-processing oil composition as set forth in any one of claims 1 to 8, wherein the component B is an amine represented by the foregoing general formula 2 or 3, wherein R⁴ to R¹¹ represent H.

10. The metal-processing oil composition as set forth in any one of claims 1 to 7, wherein the component B is an amine represented by the foregoing general formula 4.

11. The metal-processing oil composition as set forth in claim 10, wherein the component B is dicyclohexylamine.

12. The metal-processing oil composition as set forth in claim 10, wherein the component B is an amine represented by the general formula 4, wherein R¹² and R¹³ may be the same or different and each represent a group: (CₓH₂ₓO)ₙH, x is an integer ranging from 2 to 4 and n is an integer ranging from 1 to 3.

13. The metal-processing oil composition as set forth in claim 12, wherein the component B is an amine represented by the general formula 4, wherein R¹² and R¹³ may be the same or different and each represent a group: (C₂H₄O)ₙH, and n is an integer ranging from 1 to 3.

14. The metal-processing oil composition as set forth in any one of claims 1 to 7, wherein the component B is an amine represented by the foregoing general formula 5.

15. The metal-processing oil composition as set forth in claim 14, wherein the component B is an amine represented by the general formula 5, wherein R¹⁴ to R¹⁶ may be the same or different and each represent H or (C₂H₄O)ₙH, and n is an integer ranging from 1 to 3.

16. A method for processing a metal **characterized in that** the method makes use of the metal-processing oil composition as set forth in any one of claims 1 to 15.
